# EUROPÄISCHE PATENTANMELDUNG

(11) **EP 0 878 693 A1**
(43) Veröffentlichungstag der Anmeldung: **18.11.1998**
(21) Anmeldenummer: 98108610.1
(22) Anmeldetag: 12.05.1998
(51) Int. Cl.: G01D 18/00, G01K 7/42, G01K 15/00

(54) **Verfahren und Vorrichtung zur Erhöhung des Ansprechverhaltens eines Sensors**

(30) Priorität: 14.05.1997 DE 19720108
(71) Anmelder: Testo GmbH & Co., 79853 Lenzkirch (DE)
(72) Erfinder: Brödel, Axel, Dr., 79853 Lenzkirch - Kappel (DE)
(74) Vertreter: Patentanwälte Westphal,Buchner,Mussgnug,Neunert,Göhring

(57) **Zusammenfassung**

Zunächst wird eine Vorabmessung am Meßort des Sensors zur Bestimmung von Vorabmeßwerten vorgenommen. Es folgt in einer Recheneinrichtung ein Vergleich der Vorabmeßwerte mit Sollwerten. Anschließend wird eine Zeitkonstante (K) eines Korrekturterms ermittelt, um den sich die Vorabmeßwerte mindestens annähernd von den Sollwerten unterscheiden. Hierfür dient ein Rechenalgorithmus, vorzugsweise eine mathematische Reihenentwicklung. Bei anschließenden Nachfolgemessungen werden die gemessenen Sensorwerte mit dem Korrekturterm beaufschlagt.

## Beschreibung

Die Erfindung betrifft ein Verfahren zur Erhöhung des Ansprechverhaltens eines Sensors gemäß dem Oberbegriff des Anspruchs 1 sowie eine Vorrichtung zur Durchführung dieses Verfahrens.

Das Ansprechverhalten von Sensoren in Abhängigkeit vom Fühleraufbau führt regelmäßig zu einer verzögerten Anzeige der tatsächlich zu messenden Größe am Meßort. Hierbei sind unterschiedlichste Faktoren für das jedem Sensor eigene Ansprechverhalten verantwortlich. Diese können herstell-, alters-, umgebungsbedingt usw. sein. Bei einem Temperatursensor führt dieses Ansprechverhalten innerhalb des Meßgerätes zu einer verzögerten Anzeige der tatsächlich am Meßort herrschenden Temperatur.

Bisher mußte man weitgehend mit dem jeden Sensor eigenen Ansprechverhalten leben, also die Zeit abwarten, bis der Sensor seine Meßgröße tatsächlich erreicht hat.

Ziel der Erfindung ist es, ein Verfahren anzugeben, durch welches das jedem Sensor eigene Anprechverhalten verbessert werden kann. Des weiteren ist Ziel der Erfindung eine hierfür geeignete Vorrichtung zu schaffen.

Gelöst wird diese Aufgabe für das Verfahren durch die Merkmale des Anspruchs 1 und für die Vorrichtung durch die Merkmale des Anpruchs 16.

Weiterbildungen der Erfindung sind Gegenstand der Unteransprüche.

Das Verfahren nach der Erfindung beruht demnach im wesentlichen auf folgenden nacheinander ablaufenden Verfahrensschritten:
- Durchführung einer Vorabmessung am Meßort des Sensors zur Bestimmung von Vorabmeßwerten;
- Vergleich der bei der Vorabmessung ermittelten Vorabmeßwerte mit Sollwerten in einer Recheneinrichtung;
- Bestimmung einer Zeitkonstanten (K) eines Korrekturterms, um den sich die Vorabmeßwerte mindestens annähernd von den Sollwerten unterschieden durch Anwendung eines Rechenalgorithmus innerhalb der Recheneinrichtung; und
- Beaufschlagung der gemessenen Sensorwerte mit diesem Korrekturterm bei jeder Nachfolgemessung an diesem Meßort.

Die Vorabmessung dient bei dem erfindungsgemäßen Verfahren dazu, den dem jeweiligen Sensor typischen Zeitverlauf für das Erreichen eines Sollmeßwertes und damit dessen Ansprechverhalten zu ermitteln. Hierbei wird der Sollmeßwert zu eincm bestimmten Zeitpunkt als Sprungantwort von einem vorgegeben Wert, z.B. Null, vorgegeben. Nachdem das Ansprechverhalten des Sensors auf diese Sprungantwort ermittelt wurde, wird mit Hilfe eines mathematischen Algorithmus die ermittelte und für das Ansprechverhalten maßgebende Vorabmeßkurve, die den Zeitverlauf für das Erreichen des Sollmeßwertes wiedergibt, rechnerisch in die Sollmeßkurve, also Sprungantwortkurve, umgewandelt. Hierbei wird eine Zeitkonstante eines vorgegebenen Korrekturterms bestimmt, welcher bei den Nachfolgemessungen jeweils mit dem vom Sensor augenblicklich gemessenen Meßwert verrechnet, z. B. addiert, wird. Bei den Nachfolgemessungen kann auf diese Weise sehr schnell ein korrektes Meßergebnis erreicht werden, obwohl der eingesetzte Sensor ein derartig schnelles Ansprechverhalten nicht aufweist.

Würde ein Sensor aufgrund seines verhältnismäßig trägen Ansprechverhaltens erst nach z.B. 20 sec den korrekten Meßwert anzeigen, so lassen sich bei Einsatz des erfindungsgemäßen Verfahrens korrekte Meßergebnisse bereits nach z.B. 3 sec erreichen.

Das Verfahren nach der Erfindung läßt sich für unterschiedlichste Sensoren einsetzen, z.B. bei Temperatur-, Feuchte-, Gassensoren usw..

Beim erfindungsgemäßen Verfahren bietet es sich an, während der Vorabmessung eine Vielzahl von Vorabmeßwerten zur Bildung einer Meßkurve zu ermitteln. Andererseits kann jedoch bereits aufgrund weniger aufeinanderfolgender Meßwerte auf den zu erreichenden Sollmeßwert geschlossen bzw. hochgerechnet werden. Anschließend wird die Zeitkonstante für den Korrekturterm bestimmt, um die ermittelten Vorabmeßwerte bzw. die Vorabmeßkurve in die Sollkurve umzurechnen.

Während der Vorabmessung sollen konstante bzw. stabile Umgebungsbedingungen, insbesondere ein konstanter Wert der zu bestimmenden Meßgröße, am Meßort eingestellt sein. Bei einem Temperatursensor heißt dies, daß konstante Temperatur herrschen muß, sowohl bei dem vorgegebenem Anfangswert als auch bei dem ebenfalls anschließend vorgegebenen Endwert. Darüber hinaus sollten idealerweise während der Vorabmessung eine konstante Anströmgeschwindigkeit, die mindestens annähernd der Anströmgeschwindigkeit späterer Nachfolgemessungen entspricht, vorherrschen. Empfehlenswert sind des weiteren mindestens annähernd solche Strahlungsverhältnisse wie bei den späteren Nachfolgemessungen.

Es hat sich herausgestellt, daß der vorzugebende Korrekturterm in einfacher Art und Weise in Form einer mathematischen Reihenentwicklung gewählt werden kann. Eine solche Reihenentwicklung hat den entscheidenden Vorteil einer bei ausreichender Genauigkeit nur sehr kurzen Rechenzeit. Damit kann die Zeitkonstante mittels einer Recheneinrichtung, z. B. Mikrocontroller, sehr schnell bestimmt werden. Eine grafische Darstellung der Vorabkurve auf einem Display, und der sich verändernden Vorabkurve durch Verrechnung der Meßwerte mit dem in der Recheneinrichtung bestimmten Korrekturterm ist ohne weiteres möglich. Hierfür dient eine geeignete Stelleinrichtung an einem Meßgerät, durch welche die Zeitkonstante des Korrekturterms kontinuierlich so verändert wird, daß sich die Vorabkurve in Richtung Sollkurve verändert bzw. mit dieser möglichst weitgehend zur Deckung kommt. Intern wird im Meßgerät hierfür ständig die Verrechnung der Vorabkurve mit sich verändernden Zeitkonstanten bzw. Korrekturtermen vorgenommen. Für eine Bedienperson ist eine solche grafische "Anpassung" der zunächst ermittelten Vorabkurve an die Sollkurve eine sehr einfache Möglichkeit, um das Ansprechverhalten eines Sensors optimal zu erhöhen.

Die Zeitkonstante des Korrekturterms kann aus dem Produkt oder einer Addition mehrerer Einzelfaktoren gebildet sein. Der Zeitkonstante ist z. B. das Produkt einer Zeitkonstanten K_{F} des Sensors und einer Meßstellenkonstante K_{S}, die vom Medium, in dem sich der Sensor befindet, und der Anströmgeschwindigkeit abhängt.

In einer Weiterbildung der Erfindung wird der Meßtakt während der Vorabmessung zur Bestimmung der einzelnen Vorabmeßwerte zwischen etwa 0,5 sec. und etwa 5,0 sec. gewählt. Es bietet sich darüber hinaus an, die ermittelten Vorabmeßwerte vor der Bestimmung der Zeitkonstanten des Korrekturterms zu mitteln. Durch eine solche Glättung/Mittelung wird eine zulässige Fehlergröße eingehalten.

Für die Bestimmung der Vorabmeßwerte und der einzelnen Meßwerte bei den Nachfolgemessungen wird vorzugsweise ein quarzzeitgesteuerter Taktgenerator vorgesehen. Mit einem solchen quarzzeitgesteuerten Taktgenerator kann der Meßtakt exakt in gleichen Abständen eingehalten werden.

Vorzugsweise befindet sich der Sensor während den Messungen in einer geeigneten Halteeinrichtung, die einerseits den Sensor vor Beschädigung schützt und andererseits ein optimales Umströmen des Sensors sicherstellt.

Das erfindungsgemäße Verfahren ist zur Messung in strömenden Gasen konstanter Geschwindigkeit größer etwa 0,5 m/sec. und zur Messung in Flüssigkeiten bzw. Schmelzen bzw. Schüttgütern bestens geeignet.

Wie bereits erwähnt, läßt sich der für den Sensor maßgebende individuelle Zeitverlauf zum Erreichen eines Sollwertes durch ein Referenzkurvenverfahren bzw. durch eine Direktbestimmung während der Messung mit anschließender Hochrechnung erreichen. Beim Referenzkurvenverfahren wird von der Meßeinrichtung eine Sprungantwort der Meßgröße von einem konstanten Niveau auf ein zweites konstantes Niveau in Abhängigkeit von der Zeit aufgenommen. Liegen veränderliche Randbedingungen vor, die Einfluß auf das Ansprechverhalten der untersuchten Meßgröße haben, so sollte dieser Einfluß untersucht und formulartechnisch beschrieben werden. Die Auswertung kann in einer Meßeinrichtung oder separat in einem anzuschließenden Personal Computer erfolgen. Die Lösung kann direkt, iterativ oder grafisch realisiert werden. Die direkte Lösung besteht darin, die Hochrechnungsformel nach der Zeitkonstanten aufzulösen, iterativ durch schrittweises Ändern der Zeitkonstanten bis zum Erreichen einer angestrebten Genauigkeit oder grafisch durch Anzeige der Kurvenverläufe von Meßsignal und Hochrechnungsergebnis, wobei die Zeitkonstante variieren kann, bis ein optimales Ergebnis erreicht wird.

Bei der Direktbestimmung wird ein Algorithmus in die Meßeinrichtung implementiert, der folgende Charakteristik besitzt. Eine Änderung des Meßsignals um einen bestimmten Mindestbetrag aktiviert den Bestimmungsvorgang für die Zeitkonstante. Je nach Eigenschaft des Meßaufnehmers samt Sensor kann eine gewisse Zeitspanne gewartet werden. Danach wird eine bestimmte Anzahl von Meßwertpaaren (Signal + Zeit) erfaßt, die das Ansprechverhalten richtig widerspiegeln. Aus diesen Wertepaaren wird nach einem Berechnungsformalismus die Zeitkonstante ermittelt. Diese wird dann sofort in die Berechnungsformel, die weiter unten noch erläutert wird, integriert und zur Ermittlung der Sollkurve verwendet.

Bei allen Bestimmungsverfahren für die Zeitkonstante des Sensors ist es notwendig, daß die Berechnungsformel den physikalischen Zusammenhang des Anstiegsverhaltens bzw. Ansprechverhaltens näherungsweise bzw. richtig wiedergibt.

Eine Vorrichtung zur Durchführung des erfinungsgemäßen Verfahrens sieht folgende Mittel vor:
- Einen in einer Halteeinrichtung befindlichen Sensor;
- einer mit diesem Sensor verbundenen Steuereinrichtung zur Anzeige von Meßwerten des Sensors;
- eine in der Steuereinrichtung enthaltene Recheneinrichtung, in welcher ein Algorithmus gespeichert ist zur Ermittlung einer Zeitkonstanten eines Korrekturterms, um den sich die Vorabmeßwerte mindestens annähernd von den Sollwerten unterscheiden, nach Maßgabe einer Vorabmessung am Meßort des Sensors zur Bestimmung von Vorabmeßwerten und eines Vergleichs, der bei der Vorabmessung ermittelten Vorabmeßwerte mit den Sollwerten;
- einer Speichereinrichtung, in der die ermittelte Zeitkonstante des Korrekturterms abspeicherbar ist.

Vorzugsweise ist die Vorrichtung mit einem Display versehen zur Darstellung von verschiedenen Meßverläufen, unter anderem der Vorabkurve und einer Sollkurve, wobei mittels einer Stelleinrichtung die Vorabkurve durch Variation der Zeitkonstanten des Korrekturterms mit Hilfe des Algorithmus in Richtung Sollkurve veränderbar ist.

Es bietet sich an, die Vorrichtung mit einem Druckerausgangsanschluß bzw. Personal Computerausgangsanschluß oder einen integrierten Drucker zum Ausdrucken der Vorabkurve, der Sollkurve und der Meßkurven der Nachfolgemessungen zu versehen.

Das erfindungsgemäße Verfahren wird nachfolgend im Zusammenhang mit Ausführungsbeispielen von unterschiedlichen Meßfühlern in verschiedenen Medien erläutert. Es zeigen:
- Figur 1: ein Diagramm von Vorabmeßwerten und Hochrechnungsmeßwerten, die mit einem Temperaturfühler PT100 in Luft bei einer Anströmgeschwindigkeit von 2m/s und einem Meßtakt von 1 sec ohne Mittelung der Meßergebnisse bestimmt wurden,
- Figur 2: ein Diagramm des gleichen Temperaturfühlers wie in Figur 1, jedoch jetzt im Wechsel von Luft auf heißes Wasser und anschließendem Eintauchen in ein Eis-Wasser-Gemisch bei einem Meßtakt von 1 sec ohne Mittelung der Meßergebnisse sowie die zugehörenden Hochrechnungsergebnisse, und
- Figur 3: ein Diagramm eines anderen Temperaturfühlers NiCr/Ni in Luft bei einer Anströmgeschwindigkeit von 2m/sec und einem Meßtakt von 1sec bei einer Mittelung der Vorabmeßergebnisse über jeweils zwei Werte und den zugehörenden Hochrechnungsergebnissen.

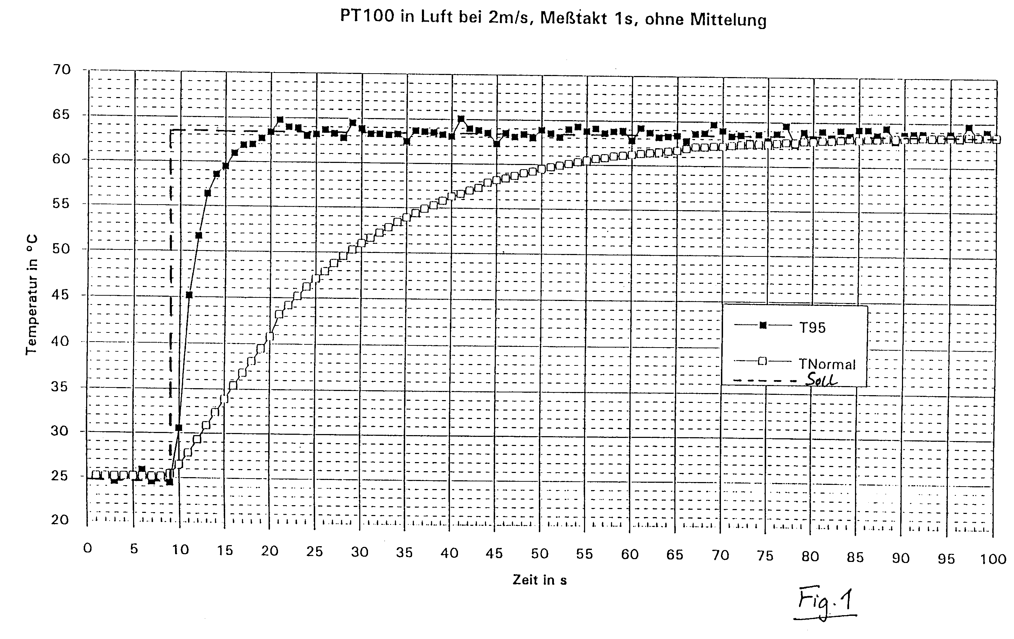

Zunächst wird anhand von Figur 1 die prinzipielle Vorgehensweise des erfindungsgemäßen Verfahrens beschrieben. Eingesetzt wird ein Sensortyp PT100 zur Bestimmung der Temperatur in Luft bei einer Anströmgeschwindigkeit von 2m/sec, wobei für eine Zeitspanne von 100sec jeweils jede Sekunde ein Meßwert vom Sensor entnommen wird. Die Temperatur wird nach etwa 9sec ausgehend von einem ersten konstanten Wert von 25°C auf einen zweiten konstanten Wert von etwa 63°C sprungartig erhöht. Der Sensor zeigt ein Ansprechverhalten bzw. einen Zeitverlauf, der durch die hellen Meßpunkte bestimmt ist. Der Sensor folgt, wie ersichtlich, sehr langsam der Temperaturänderung und erreicht den Sollwert von etwa 63°C erst nach etwa 90 Sekunden. Idealerweise sollte das Ansprechverhalten des Sensors jedoch der strichliert dargestellten Sollkurve folgen.

Hier setzt das erfindungsgemäße Verfahren an. Mittels eines geeigneten Algorithmus, der vorzugsweise eine mathematische Reihenentwicklung ist, wird die durch die hellen Meßpunkte vorgegebene Vorabmeßkurve des Sensors so umgerechnet, daß mindestens annähernd die Sollkurve erreicht wird. Nach dem erfolgten Umrechnungsvorgang, der in einer geeigneten Recheneinrichtung der Meßeinrichtung durchgeführt wird, stellt sich bei Nachfolgemessungen die durch die dunklen Meßpunkte errechnete Meßkurve ein. Diese als T95 bezeichnete Meßkurve entspricht weitgehend der Sollkurve, wie in Figur 1 zu erkennen ist. Bei jeder Nachfolgemessung wird die eigentliche Ansprechverhaltenskurve des Sensors mit dem nach Aufnahme der Vorabmeßkurve ermittelten bzw. errechneten Zeitkonstanten des Korrekturterms multipliziert, so daß bei den Nachfolgemessungen sehr schnell der "korrekte Meßwert" der Meßeinrichtung angezeigt werden kann.

Der Korrekturterm und die Zeitkonstante bestimmt sich beispielsweise wie folgt.

Das Verfahren beruht auf der Auswertung von zwei aufeinanderfolgenden Temperaturmessungen mit bekannter Zeitdifferenz, aus der sich der zu erwartende Endwert bzw. der real am Meßort herrschende Temperaturwert ergibt. Dabei wird z. B. folgende vereinfachte Modellformel verwandt:

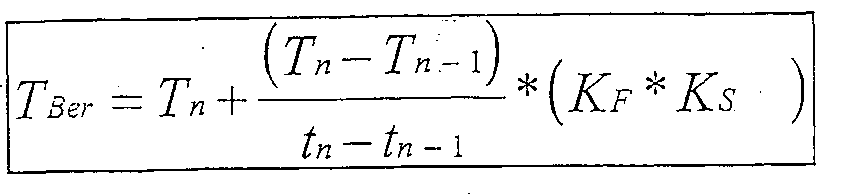

In dieser Formel bedeuten:
- T_{Ber} =: Wert der hochgerechneten Temperatur,
- Tₙ =: Wert der aktuell gemessenen Temperatur,
- Tₙ₋₁ =: Wert der einen Zeitschritt zuvor gemessenen Temperatur,
- tₙ =: Zeitpunkt der aktuellen Messung,
- tₙ₋₁ =: Zeitpunkt der vorhergehenden Messung,
- K_{F} =: Fühlerkonstante des Sensors,
- K_{S} =: Skalierungsfaktor in Abhängigkeit von Medium und Anströmgeschwindigkeit.

Die Temperatur T_{Ber}, Tₙ und Tₙ₋₁ sind in der Einheit °C und die Zeiten tₙ und tₙ₋₁ sowie die Fühlerkonstante K_{F} in der Einheit Sekunden angegeben. Der Skalierungsfaktor bzw. Meßstellenfaktor K_{S} ist in Prozent angegeben. Das Produkt K_{F} · K_{S} ist die vorstehend bezeichnete Zeitkonstante, während der gesamte zweite Summenterm in obiger Formel den Korrekturterm bildet.

Es empfiehlt sich, um eine zulässige Fehlergröße bei dieser Berechnungsformel einzuhalten, daß der Meßtakt etwa zwischen 0,5 bis 5,0 sec variiert und eventuell für die ermittelten Meßwerte über 1 bis 3 Werte geglättet bzw. gemittelt wird. Die oben genannte Formel läßt sich nach einer erfolgten Vorabmessung von Vorabmeßwerten (vgl. in Figur 1 die Meßkurve mit den hellen Meßpunkten) nach der Zeitkonstanten des Korrekturterms, hier dem Produkt der Faktoren K_{F} und K_{S}, auflösen, wenn die Solltemperatur, also T_{Ber}, bekannt ist. Damit ist der Korrekturterm insgesamt bestimmt. Bei Nachfolgemessungen wird dieser Korrekturterm bei zwei aufeinanderfolgenden Temperaturmessungen mit bekannter Zeitdifferenz eingesetzt und damit die Endtemperatur der Nachfolgemessung bestimmt.

Es versteht sich, daß der Korrekturterm K möglichst genau bestimmt werden muß. Die Größe eines Meßfehlers ist nämlich von der Güte der Bestimmung des Korrekturterms und damit von der Sorgfalt des Messenden und dem Meßortzustand abhängig. Eine fehlerhafte Bestimmung des Korrekturterms wirkt sich nämlich derart aus, daß der Erwartungswert erst zu hoch oder zu niedrig ermittelt wird und sich anschließend in Richtung des tatsächlichen Wertes angleicht, so daß ein gewünschtes schnelles, sicheres Meßergebnis nicht erreicht wird.

Für die Bestimmung sollten am Meßort stabile Bedingungen vorhanden sein, nämlich:
- Die Temperatur sollte während der Aufnahme der Vorabmeßkurve konstant sein,
- die Anströmgeschwindigkeit des Sensorfühlers sollte konstant sein und der bei den Nachfolgemessungen an diesem Ort entsprechen,
- die Strahlungsverhältnisse am Meßort sollen relativ gleichbleiben, also keine Bestimmungsmessung an einer kalten Anlage, wenn sie bei den späteren Messungen z. B. bei sehr hohen Temperaturen betrieben wird.

Um bei der Bestimmung der Zeltkonstanten des Korrekturterms optimale Ergebnisse zu erreichen, bietet es sich an, eine Meßkurve aufzunehmen, ähnlich wie in Figur 1, und diese mit grafischer Unterstützung und Anschauung durch eine Meßperson auszuwerten. Dabei ist diese in der Lage, die Güte der aufgenommenen Meßkurve einfach optisch zu bewerten und die Relevanz der ermittelten Zeitkonstanten des Korrekturterms richtig einzuschätzen. Als Datenkommunikation kann beispielsweise zwischen ein Meßgerät, daß den Sensor enthält, eine Verbindung zu einem Personal Computer vorgesehen werden. Darüber hinaus ist es ohne weiteres möglich, im Meßgerät selbst eine Druckereinrichtung bzw. ein grafisches Display vorzusehen, um das in Figur 1 dargestellte Diagramm anschaulich zu präsentieren.

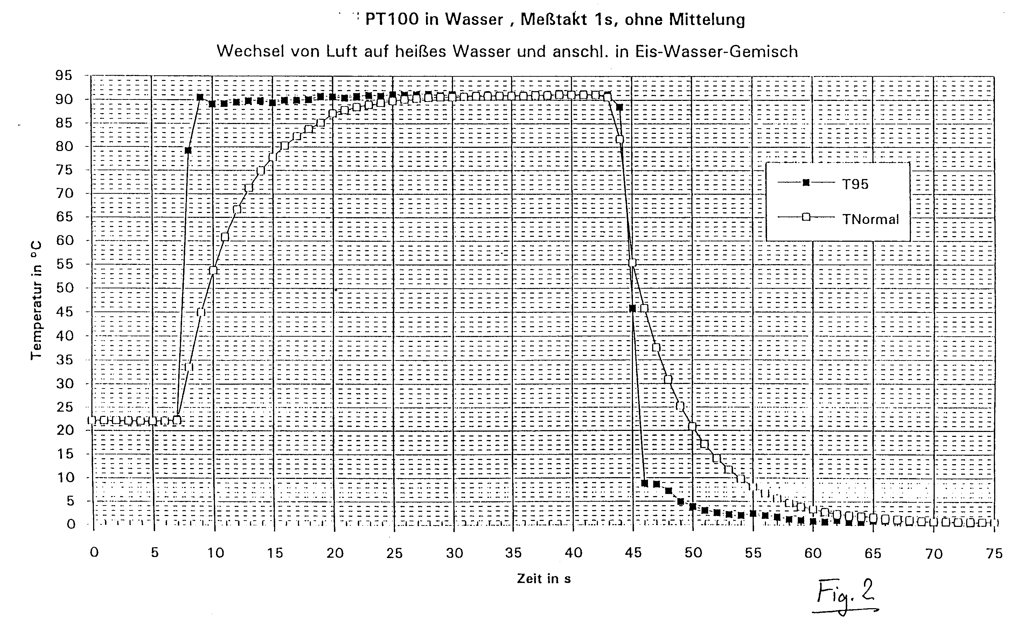

In Figur 2 ist ein weiteres Diagramm dargestellt, das sowohl das Ansprechverhalten des oben erwähnten Temperaturfühlers PT100 als auch dessen hochgerechneten Meßwerte zeigt. Im dargestellten Ausführungsbeispiel wird der Temperaturfühler PT100 aus Luft mit einer Temperatur von etwa 22°C in heißes Wasser von etwa 90°C getaucht und anschließend in ein Eis-Wasser-Gemisch, das eine Temperatur von 0°C hat, gesetzt. Meßtakt ist wieder 1 sec ohne Mittelung der Vorabmeßwerte. Das Ansprechverhalten zeigt die durch die hellen Meßpunkte dargestellte Vorabmeßkurve. Die korrigierten, hochgerechneten Meßwerte sind durch die dunklen Meßpunkte markiert. Es zeigt sich deutlich der dem Sollverlauf angenäherte Verlauf der hochgerechneten Meßkurve im Vergleich zu der ursprünglichen Vorabmeßkurve des Temperaturfühlers PT100.

Mittels eines optischen Verfahrens an einem Display des Meßgerätes oder einem mit dem Meßgerät verbundenen Personal Computer kann die Vorabmeßkurve so "verzogen" bzw. verschoben werden, daß sich die einzelnen hellen Meßpunkte in Richtung dunkler Meßpunkte bewegen und dort zu liegen kommen. Ist die Vorabmeßkurve derartig "verzogen", was durch kontinuierliches Verändern des Korrekturterms innerhalb der Recheneinrichtung des Meßgerätes getan wird, ist der für diesen Sensor am Meßort optimale Korrekturterm bestimmt. Bei dem sich anschließenden Nachfolgemessungen wird dieser Korrekturterm selbsttätig in der Recheneinrichtung den ermittelten Meßwerten des Sensors durch Addition hinzugefügt. Ein sehr schnelles Erreichen des eigentlichen Sollwertes ist die Folge.

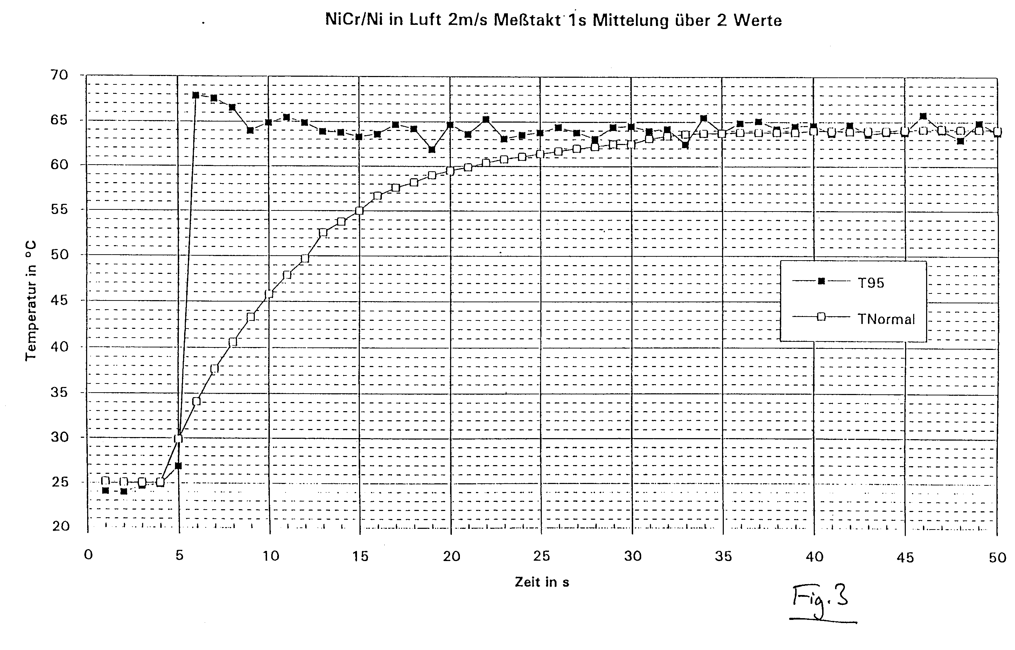

In Figur 3 ist ein anderer Temperaturfühler, hier ein NiCr/Ni Temperaturfühler, bzw. dessen Vorabmeßkurve (vgl. helle Meßpunkte) und dessen hochgerechneten Meßwerte grafisch dargestellt. Der Temperaturfühler wird ausgehend von einer Anfangstemperatur von etwa 25°C anschließend von Luft mit einer Temperatur von etwa 63°C von einer Anströmgeschwindigkeit von 2m/sec umströmt. Der Meßtakt beträgt 1sec, wobei die ermittelten Vorabmeßwerte über zwei Werte jeweils gemittelt werden. Auch hier ist deutlich erkennbar, daß durch die Hochrechnung das verhältnismäßig langsame Ansteigen des Temperaturfühlers "beschleunigt" werden kann.

Das erfindungsgemäße Verfahren eignet sich gut zur Messung in strömenden Gasen konstanter Geschwindigkeit größer etwa 1m/sec. Darüber hinaus ist es auch zur Messung in ruhenden oder strömenden Flüssigkeiten/Schmelzen und zur Messung von Schüttgütern geeignet.

Bei Messungen in langsam fließenden oder ruhenden oder gasförmigen Medien, z. B. Luft, ist die Anströmgeschwindigkeit eine wesentliche Einflußgröße. Diese sollte mindestens 0,5 bis 1,0 m/sec betragen, um sichere Hochrechnungsergebnisse zu erhalten. Das Verfahren eignet sich auch zur Oberflächentemperaturmessung, wobei allerdings zu beachten ist, daß das Ansprechverhalten des Sensors sehr stark durch das Aufsetzen und damit durch den Kontakt zwischen Fühler und Oberfläche beeinflußt wird, so daß bei manuellen Messungen möglicherweise Fehlmes-sungen auftreten können. Ist ein gleichmäßiges Aufsetzen, z. B. durch das Vorsehen einer geeigneten Haltevorrichtung für den Sensor, gewährleistet, so können mit dem erfindungsgemäßen Verfahren gute Ergebnisse erwartet werden.

## Patentansprüche

1. Verfahren zum Erhöhen des Ansprechverhaltens eines Sensors, insbesondere eines Temperatur-, Feuchte- oder Gassensors, welcher nach seiner Herstellung ein individuelles Ansprechverhalten aufweist, mit folgenden Verfahrensschritten:
- Durchführung einer Vorabmessung am Meßort des Sensors zur Bestimmung von Vorabmeßwerten;
- Vergleich der bei der Vorabmessung ermittelten Vorabmeßwerte mit Sollwerten in einer Recheneinrichtung;
- Bestimmung einer Zeitkonstante (K) eines Korrekturterms, um den sich die Vorabmeßwerte mindestens annähernd von den Sollwerten unterscheiden durch Anwendung eines Rechenalgorithmus innerhalb der Recheneinrichtung; und
- Beaufschlagung der gemessenen Sensorwerte mit diesem Korrekturterm bei jeder Nachfolgemessung an diesem Meßort.

2. Verfahren nach Anspruch 1, dadurch gekennzeichnet, daß während der Vorabmessung eine Vielzahl von Vorabmeßwerten zur Bildung einer Meßkurve ermittelt werden.

3. Verfahren nach Anspruch 1 oder 2, dadurch gekennzeichnet, daß am Meßort während der Vorabmessung stabile Umgebungsbedingungen eingestellt sind.

4. Verfahren nach Anspruch 3, dadurch gekennzeichnet, daß während der Vorabmessung mindestens annähernd ein konstanter Wert der Meßgröße eingestellt ist.

5. Verfahren nach Anspruch 3 oder 4, dadurch gekennzeichnet, daß während der Vorabmessung eine konstante Anströmgeschwindigkeit, die mindestens annähernd der Anströmgeschwindigkeit der späteren Nachfolgemessungen entspricht, eingestellt ist.

6. Verfahren nach einem der Ansprüche 3 bis 5, dadurch gekennzeichnet, daß während der Vorabmessung mindestens annähernd solche Strahlungsverhältnisse wie bei den späteren Nachfolgemessungen herrschen.

7. Verfahren nach einem der Ansprüche 1 bis 6, dadurch gekennzeichnet, daß der Korrekturterms aus dem Produkt mehrerer Einzelfaktoren bzw. Einzelterme gebildet wird.

8. Verfahren nach Anspruch 7, dadurch gekennzeichnet, daß die Zeitkonstante aus dem Produkt einer Fühlerkonstante (K_{F}) des Senors und einem Meßstellungskonstante (K_{S}), der vom Medium und der Anströmgeschwindigkeit abhängt, gebildet wird.

9. Verfahren nach einem der Ansprüche 1 bis 8, dadurch gekennzeichnet, daß als Algorithmus zur Bestimmung des Korrekturterms eine mathematische Reihenentwicklung eingesetzt wird.

10. Verfahren nach einem der Ansprüche 1 bis 10, dadurch gekennzeichnet, daß der Meßtakt während der Vorabmessung zur Bestimmung der einzelnen Vorabmeßwerte größer etwa 0,5 sec bis etwa 5 sec gewählt wird.

11. Verfahren nach einem der Ansprüche 1 bis 10, dadurch gekennzeichnet, daß die ermittelten Vorabmeßwerte vor der Bestimmung des Korrekturterms gemittelt werden.

12. Verfahren nach einem der Ansprüche 1 bis 11, dadurch gekennzeichnet, daß die ermittelten Vorabmeßwerte und die Sollmeßwerte jeweils als Vorabkurve und Sollkurve auf einem Display optisch dargestellt werden, und daß mittels einer Stelleinrichtung die Vorabkurve an die Sollkurve mindestens annähernd verschobern wird, wobei in der Recheneinrichtung die Zeitkonstante (K) des Korrekturterms nach Beendigung des Verschiebevorganges gespeichert wird.

13. Verfahren nach einem der Ansprüche 1 bis 12, dadurch gekennzeichnet, daß ein quarzzeitgesteuerter Taktgenerator vorgesehen ist, aus dem der Meßzyklus abgeleitet wird.

14. Verfahren nach einem der Ansprüche 1 bis 13, dadurch gekennzeichnet daß der Sensor während der Vorabmessung und während den Nachfolgemessungen in einer Halteeinrichtung gehalten wird.

15. Verfahren nach einem der Ansprüche 1 bis 14, dadurch gekennzeichnet, daß während der Vorabmessung nur einige wenige aufeinanderfolgende Vorabmeßwerte bestimmt werden, und daß auf Grundlage dieser wenigen Vorabmeßwerte auf den Sollmeßwert geschlossen wird.

16. Verwendung des Verfahrens nach einem der Ansprüche 1 bis 15 zur Messung in strömenden Gasen konstanter Geschwindigkeit größer etwa 0,5 m/sec oder zur Messung in Flüssigkeiten oder Schmelzen oder Schüttgüttern.

17. Vorrichtung zur Durchführung des Verfahrens nach einem der Ansprüche 1 bis 15 mit
- einem in einer Halteeinrichtung befindlichen Sensor;
- einer mit dem Sensor verbundenen Steuereinrichtung zur Anzeige von Meßwerten des Sensors,
- eine in der Steuereinrichtung enthaltene Recheneinrichtung, in welcher ein Algorithmus gespeichert ist zur Ermittlung einer Zeitkonstanten (K) eines Korrekturterms, um den sich die Vorabmeßwerte mindestens annähernd von den Sollwerten unterscheiden, nach Maßgabe einer Vorabmessung am Meßort des Sensors zur Bestimmung von Vorabmeßwerten und eines Vergleichs der bei der Vorabmessung ermittelten Vorabmeßwerte mit Sollwerten;
- einer Speichereinrichtung in der die ermittelte Zeitkonstante (K) speicherbar ist.

18. Vorrichtung nach Anspruch 17, dadurch gekennzeichnet, daß ein Display vorgesehen ist zur Darstellung einer Vorabkurve und einer Sollkurve, und daß mittels einer Stelleinrichtung die Vorabkurve durch Variation der Zeitkonstanten (K) des Korrekturterms des Algorithmus in Richtung Sollkurve veränderbar ist.

19. Vorrichtung nach Anspruch 18, dadurch gekennzeichnet, daß die Vorrichtung einen Druckerausgangsanschluß oder einen integrierten Drucker aufweist zum Ausdrucken der Vorabkurve, der Sollkurve und der Meßkurven der Nachfolgemessungen.

20. Vorrichtung nach einem der Ansprüche 17 bis 19, dadurch gekennzeichent, daß der Sensor in einer Halteeinrichtung aufgenommen ist und/oder eine umhauste Meßspitze aufweist.
